# FASCICULE DE BREVET EUROPEEN

(11) **EP 2 927 050 B1**
(45) Date de publication et mention de la délivrance du brevet: **18.03.2020**
(21) Numéro de dépôt: 15159808.3
(22) Date de dépôt: 19.03.2015
(51) Int. Cl.: F21S 41/29, F21S 41/26, F21S 43/40, B60Q 1/34, B60Q 1/28

(54) **DISPOSITIF LUMINEUX AVEC ÉCRAN DE DÉVIATION**
LEUCHTVORRICHTUNG MIT ABLENKBILDSCHIRM
LUMINOUS DEVICE WITH DEFLECTING SHIELD

(30) Priorité: 01.04.2014 FR 1452891
(43) Date de publication de la demande: 07.10.2015
(73) Titulaire: VALEO VISION, 93012 Bobigny Cedex (FR)
(72) Inventeur: Soenen, Xavier, 49100 ANGERS (FR); Baert, Christophe, 49460 MONTREUIL JUIGNE (FR)

(56) Documents cités:
- EP-A1- 0 715 988
- EP-A1- 0 784 185
- EP-A1- 0 842 818
- EP-A2- 0 193 294
- EP-A2- 1 176 361
- EP-A2- 1 632 710
- WO-A1-2011/092052
- DE-A1- 2 647 090
- DE-A1- 3 633 662
- DE-A1-102006 008 717
- DE-A1-102007 033 711
- DE-A1-102012 005 826
- FR-A1- 2 614 969
- FR-A1- 2 695 189
- US-A- 4 654 761
- US-A- 5 055 983
- US-A1- 2007 127 251
- US-B1- 6 305 830

## Description

L'invention a trait au domaine de l'éclairage et/ou de la signalisation lumineuse. Plus particulièrement, l'invention a trait au domaine des dispositifs lumineux pourvu d'au moins un module optique apte à produire un faisceau lumineux.

Le document de brevet publié FR 2 691 231 A1 divulgue un dispositif de signalisation lumineuse, notamment pour des fonctions de feux de position ou d'indicateur de direction (clignotant). Ce dispositif comprend une source lumineuse et une glace pourvue, sur sa face intérieure, d'aménagements, tels que des surfaces arrondies, destinés à étaler, par réfraction, les rayons provenant de la source lumineuse et traversant la glace. L'objectif de ces aménagements est de permettre un étalement horizontal du faisceau notamment dans une direction latérale extérieure du véhicule. Cet étalement permet à un dispositif lumineux s'étendant essentiellement perpendiculairement à l'axe longitudinal du véhicule de produire un faisceau qui couvre un secteur formant un angle de 80° avec l'axe longitudinal et orienté vers l'extérieur du véhicule, conformément aux exigences réglementaires.

Le document de brevet publié FR 2 679 978 A1 divulgue un dispositif d'éclairage de plaque d'immatriculation de véhicule, comprenant, essentiellement, un boîtier renfermant une source lumineuse et pourvu d'une glace. Cette dernière, similairement à celle du dispositif lumineux de l'enseignement précédent, comprend sur sa face intérieure des facettes inclinées aptes à réfléchir les rayons et, partant, à les dévier latéralement vers la plaque d'immatriculation.

Ces deux enseignements sont intéressants pour dévier latéralement des rayons d'un dispositif lumineux. La solution de ces enseignements n'est cependant pas applicable à tous types de glace, notamment les glaces de projecteur. En effet, les surfaces actives en forme de facettes ou de surfaces arrondies peuvent poser problème lors des opérations de moulage de la glace. En effet, en raison de leur géométrie, le démoulage de la glace est susceptible de générer des défauts notamment aux zones dont les angles de dépouille sont défavorables. De plus, pour des raisons notamment d'homogénéité, ces surfaces doivent être de taille réduite, ce qui signifie qu'un défaut géométrique d'une dimension donnée peut s'avérer important en relation avec la taille de la surface. Par ailleurs, les projecteurs peuvent être proposés avec différents types de source de lumière, comme les types halogène, xénon et diode à électroluminescence (led). L'ajout de surfaces optiquement actives, comme dans les enseignements discutés ci-avant, sur la glace pourra fonctionner avec certaines de ces sources lumineuses (par exemple du type halogène) mais pas avec les autres (par exemple xénon et led). Dans ce cas, il est alors nécessaire de prévoir des glaces spécifiques aux types de sources lumineuses. Aussi, il est courant d'appliquer un vernis anti condensation sur la face intérieure de la glace, la présence de surfaces actives pouvant alors rendre plus difficile l'application dudit vernis. L'application du vernis peut également venir combler les motifs et dégrader ainsi leurs propriétés optiques. Les documents EP-A-1632710, DE-A-102006008717 et US-A-2007/0127251 montrent chacun un projecteur de véhicule automobile comprenant un écran disposé entre la glace extérieure du projecteur et un module optique, l'écran étant prévu pour dévier une partie du faisceau lumineux dudit module.

L'invention a pour objectif de proposer une solution à la déviation latérale du faisceau d'un dispositif lumineux qui pallie au moins un des problèmes susmentionnés. Plus précisément, l'invention a pour objectif de proposer une solution à la déviation latérale du faisceau d'un dispositif lumineux qui soit économique en permettant davantage de flexibilité en termes de configurations, tout en remplissant les conditions réglementaire de la grille photométrique de la fonction d'éclairage concernée.

L'invention a donc pour objet un projecteur disposé à l'avant de chaque côté d'un véhicule automobile, tel que défini dans la revendication 1.

L'axe longitudinal passant par le module optique désigne l'axe général de projection du faisceau vers l'avant du véhicule. Cet axe longitudinal est aussi l'axe de déplacement rectiligne du véhicule vers l'avant.

La direction de déviation de la première partie du faisceau correspond à la direction générale des rayons déviés par le premier moyen ménagé sur l'écran.

Une telle solution est particulièrement avantageuse puisque l'écran, tout en étant peu intrusif dans le faisceau lumineux, permet d'atteindre la réglementation en des points de la grille photométrique placés à 45°, le seuil d'éclairage requis en ces points ne pouvant être atteint seul par le module sans l'écran.

Selon un mode de réalisation, l'écran comprend un second moyen adapté pour dévier une seconde partie du faisceau selon une direction comprise entre 70° et 80° vers l'extérieur du véhicule par rapport à l'axe longitudinal passant par le module optique.

Avantageusement, l'écran s'étend à distance de la glace, ladite distance étant notamment constante.

Le premier moyen et/ou le second moyen pour dévier la partie du faisceau comprend des moyens de réflexion et/ou de réfraction.

Selon un mode de réalisation, l'écran comprend une face d'entrée disposée en face du ou des modules optiques, une face de sortie, et les moyens de réflexion étant formés par des facettes de réflexion ménagées sur au moins une desdites faces d'entrée et de sortie.

Dans un tel cas, les facettes de réflexion de l'écran sont inclinées de manière à ce que les rayons de la première partie et/ou de la seconde partie du faisceau lumineux rencontrent lesdits facettes de réflexion avec un angle d'incidence supérieur à l'angle limite de réfraction, lesdits rayons subissant alors une réflexion totale.

Selon un exemple de réalisation, la face de l'écran sur laquelle les facettes de réflexion sont présentes est plane. Alternativement, cette face peut être courbe. On comprend ici que c'est la face dans sa globalité qui est plane. La surface à considérer est donc la face sur laquelle les facettes de réflexion prennent naissance.

On notera qu'au moins une première portion de l'écran est délimitée par au moins trois bords et en ce qu'une autre partie, autrement appelée troisième partie du faisceau lumineux du premier module passe à côté de la première portion et au moins le long des trois bords. On précise qu' au moins deux des trois bords peuvent être concourants.

Selon une réalisation de l'invention, la position de l'écran est choisie pour être visible selon différents angles de visibilité, en particulier à des angles où les rayons ne rencontrant pas l'écran ne sont pas visibles, en étant à une distance supérieure à 4 mm, notamment environ 5 mm.

Selon un mode avantageux de l'invention, les facettes sont préférentiellement transparentes, plus précisément vierges de revêtement réfléchissant.

Selon un mode avantageux de l'invention, les facettes de réflexion de l'écran sont inclinées de manière à ce que les rayons de la partie du ou des faisceaux lumineux dudit ou desdits modules optiques, respectivement, rencontrent lesdits facettes avec un angle d'incidence supérieur à l'ange limite de réfraction, lesdits rayons subissant alors une réflexion totale.

Selon un mode avantageux de l'invention, les facettes de réflexion s'étendent au moins essentiellement verticalement et forment un motif répétitif dans une direction horizontale. Alternativement, les facettes de réflexion peuvent former un motif variable dans la direction horizontale.

Selon un mode avantageux de l'invention, la partie du ou de chacun des faisceaux lumineux dudit ou desdits modules optiques, respectivement, qui est déviée latéralement correspond à moins de 15%, préférentiellement 10%, plus préférentiellement 5% de la puissance lumineuse dudit faisceau.

Selon un mode avantageux de l'invention, le ou au moins un des modules comprend une source lumineuse et un réflecteur avec une surface réfléchissante dont une zone est configurée pour réfléchir les rayons provenant de ladite source majoritairement vers l'écran en vue d'être déviés latéralement, la surface de ladite zone étant comprise entre 1% et 15%, préférentiellement 2% et 10%, plus préférentiellement 3% à 8% de la surface totale de la surface réfléchissante.

Selon un mode avantageux de l'invention, le dispositif comprend un premier et un deuxième module optique apte à produire un faisceau lumineux et logé dans le boîtier, l'écran étant disposé de manière à ce qu'une première portion dudit écran dévie latéralement une partie du faisceau lumineux du premier module et une deuxième portion dudit écran dévie latéralement une partie du faisceau lumineux du deuxième module.

Selon un mode avantageux de l'invention, l'écran comprend des moyens de fixation situés entre la première portion et la deuxième portion dudit écran.

Selon une réalisation de l'invention, ces moyens de fixation peuvent comprendre une patte de fixation s'étendant en arrière de l'écran. Par exemple, cette patte présente une extrémité jointe à la face arrière de l'écran et s'étend vers l'arrière du dispositif lumineux, à savoir dans le sens opposé au sens d'émission de la lumière par le projecteur, la deuxième extrémité de la patte étant agencé de manière à ce que l'écran soit devant celle-ci, en particulier lorsqu'observé dans le sens opposé au sens d'émission de la lumière par le projecteur. Ceci permet que l'écran masque en grande partie, voire totalement cette patte, à la vue d'un observateur extérieur au projecteur. L'écran semble ainsi flotter dans l'air à l'intérieur du dispositif. Pour renforcer cet effet, cette patte de fixation peut s'étendre essentiellement perpendiculairement aux première et deuxième portions.

Selon un mode avantageux de l'invention, le dispositif comprend un masque avec une portion séparant les premier et deuxième modules, l'écran étant fixé à ladite portion de masque.

Selon un mode avantageux de l'invention, le premier module est situé au-dessus, verticalement, du deuxième module ou vice versa.

Selon un mode avantageux de l'invention, la portion de masque séparant les premier et deuxième modules, et la patte de fixation de l'écran s'étendent généralement horizontalement.

Selon un mode avantageux de l'invention, le deuxième module est situé en retrait rapport au premier module, et ce suivant une direction longitudinale correspondant aux directions principales des faisceaux desdits modules.

Selon un mode avantageux de l'invention, le premier module est un indicateur de direction de véhicule et/ou le deuxième module est une lampe ville ou un feu diurne de véhicule. La lampe ville est encore appelée lanterne de véhicule.

Selon un mode avantageux de l'invention, chacun des premier et deuxième modules comprend un réflecteur avec une surface réfléchissante apte à réfléchir les rayons d'une ou plusieurs sources lumineuses, lesdits réflecteurs étant d'un seul tenant, préférentiellement venus de matière plastique.

Selon un mode avantageux de l'invention, le dispositif comprend, en outre, un troisième module optique et préférentiellement un quatrième module optique, aptes à produire un faisceau lumineux et logés dans le boîtier, le troisième module étant un module d'éclairage du type code et le quatrième module étant un module d'éclairage du type route.

Les mesures de l'invention sont intéressantes en ce qu'elles permettent par des moyens économiques de dévier une partie d'un ou plusieurs faisceaux lumineux, notamment en vue de remplir des exigences réglementaires. Ces moyens évitent de devoir modifier la glace du dispositif, ce qui confère à l'invention également un avantage en termes de polyvalence et de modularité.

D'une manière générale, selon l'invention, une fonction réglementaire d'un indicateur de direction ou d'une lampe ville et/ou d'une éclairage ou feu diurne d'un véhicule est remplie par la combinaison de la partie du faisceau lumineux passant au travers de l'écran avec la partie du faisceau lumineux passant à côté de l'écran, ces parties de faisceau étant générées par le premier module.

Le module optique selon l'invention peut former une partie ou la totalité d'un faisceau code, d'un faisceau route, ou d'un faisceau antibrouillard, et pour les fonctions de signalisation, une fonction d'indicateur de direction, de lampe ville, de feu stop, de feu de position diurne (encore appelé DRL pour « *Day-time Running Light »).*

D'autres caractéristiques et avantages de la présente invention seront mieux compris à l'aide de la description et des dessins parmi lesquels :
- La figure 1 est une vue de dessus d'un véhicule automobile pourvu de projecteurs conformes à l'invention ;
- La figure 2 est une vue en perspective d'un projecteur conforme à l'invention, le projecteur étant dépourvu de sa glace ;
- La figure 3 est une vue de face du projecteur de la figure 2 ;
- La figure 4 est une vue en perspective de l'écran du projecteur des figures 2 et 3;
- La figure 5 est une vue en perspective d'une portion du projecteur des figures 2 et 3, illustrant de manière schématique le parcours de rayons via l'écran ;
- La figure 6 est une vue en coupe VI-VI de la portion verticale de l'écran de la figure 4, le parcours de deux rayons y étant schématiquement représentés.

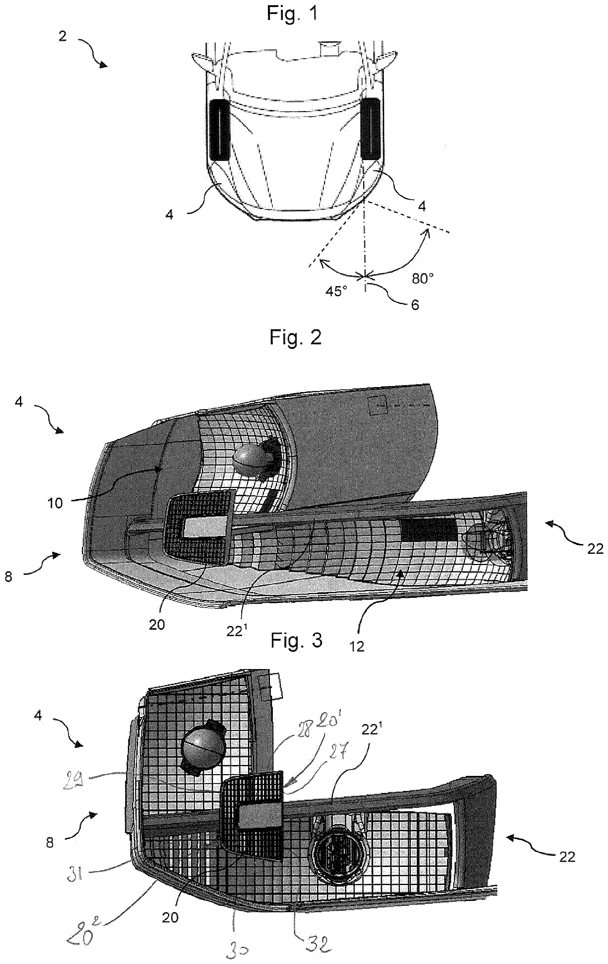

La figure 1 illustre l'avant d'un véhicule 2 pourvu, de manière classique, de deux projecteurs 4 disposés à l'avant de chaque côté du véhicule. Un axe longitudinal 6 passant par un module optique et/ou un des projecteurs, en l'occurrence le projecteur gauche, y est représenté. Certaines réglementations en matière de photométrie des dispositifs d'éclairage et de signalisation lumineuse de véhicules automobile impose pour certaines fonctions, notamment pour les fonctions de signalisation comme les indicateurs de direction (clignotant) et les feux de position (ou encore lampe ville), de produire un faisceau couvrant par exemple un secteur de 80° par rapport à la direction longitudinale et dirigé vers l'extérieur ainsi qu'un secteur de 45° par rapport à la même direction mais dirigé vers l'intérieur du véhicule. Ces deux secteurs sont représentés à la figure 1.

Les fonctions d'indicateur de direction et de lampe ville, à l'avant du véhicule, sont habituellement intégrées dans le projecteur 4. En raison de la forme inclinée du projecteur par rapport à une direction transversale du véhicule, le module indicateur de direction et le module lanterne remplissent facilement les exigences photométriques réglementaires vers l'extérieur du véhicule. Ces modules ont par contre plus de difficultés à être visibles depuis une position centrale dans le secteur de 45° visible à la figure 1. Afin de pallier cette difficulté, le projecteur 4 comprend un écran de déviation, disposé entre les modules en question et la glace du projecteur, comme cela va être détaillé en relation avec les figures 2 à 6.

Les figures 2 et 3 illustrent le projecteur 4 sans sa glace. Le projecteur 4 comprend un boîtier 8 dans lequel sont logés quatre modules optiques lumineux, en l'occurrence un premier module optique 10 assurant une fonction indicateur de direction (ou encore clignotant) et un deuxième module optique 12 assurant une fonction de lampe ville et/ou feu diurne. Le projecteur 4 peut également comprendre un troisième module optique (non représenté) assurant une fonction d'éclairage du type code (ou encore de croisement), et/ou un quatrième module optique (non représenté) assurant une fonction d'éclairage du type route. Comme cela est visible aux figures 2 et 3, le module indicateur de direction 10 est disposé au-dessus du module lampe ville 12. Un masque 22 est disposé entre ces deux modules 10 et 12, ce masque comprenant une portion 22¹ s'étendant essentiellement horizontalement entre lesdits modules. Un écran 20 est fixé sur cette portion 22¹ de masque 22 de manière à être disposé partiellement dans le faisceau lumineux du module indicateur de direction 10 et avantageusement partiellement dans le faisceau lumineux du module lampe ville 12.

L'écran 20 est réalisé en matériau transparent ou translucide de manière à former un dioptre avec l'air ambiant. Il est disposé préférentiellement à distance de la face interne de la glace, comme par exemple à une distance comprise entre 1 et 10mm, préférentiellement entre 1 et 5mm.

L'écran 20 est configuré pour dévier les rayons le traversant, et ce transversalement vers un axe longitudinal central du véhicule. En référence aux figures 2 et 3, l'écran 20 dévie une partie des rayons des faisceaux lumineux du ou desdits modules optiques 10 et 12 vers la gauche (ou vers la droite si l'on se met dans le sens de marche du véhicule), de manière à être visibles depuis une position d'observation sur l'axe longitudinal central du véhicule, conformément aux réglementations discutées ci-avant. Pour ce faire, l'écran 20 comprend un premier moyen adapté pour dévier une première partie du faisceau selon une direction comprise entre 35° et 45° vers l'intérieur du véhicule, c'est-à-dire vers l'axe longitudinal central du véhicule, par rapport à un axe longitudinal 6 passant par le module optique. De manière avantageuse, c'est la valeur à 45° qui est la plus difficile à obtenir et l'écran 20 selon l'invention le permet.

Comme cela est bien visible à la figure 2 et davantage à la figure 3, l'écran 20 est configuré pour n'intercepter qu'une partie de d'au moins un, ou de chacun des faisceaux des modules optiques 10 et 12 avec lesquelles il est prévu de coopérer. Il ne dévie par conséquent qu'une partie des rayons de chacun de faisceaux, autrement appelée première partie du faisceau lumineux généré par l'un et/ou l'autre des modules optiques. Cette partie peut être inférieure à 15%, préférentiellement 10%, plus préférentiellement 5%, de la puissance lumineuse de chacun des faisceaux.

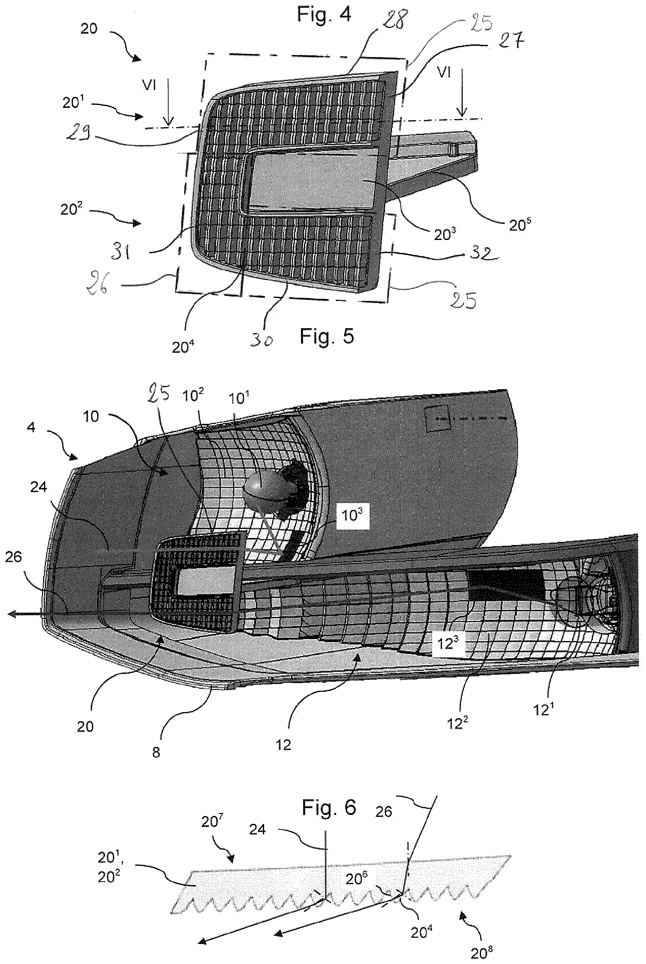

La figure 4 illustre l'écran 20 de manière détaillée. Comme indiqué plus haut, l'écran 20 comprend un premier moyen 25 adapté pour dévier une première partie du faisceau selon une direction comprise entre 35° et 45° vers l'intérieur du véhicule, c'est-à-dire vers l'axe longitudinal central du véhicule, par rapport à un axe longitudinal 6 passant par le module optique concerné, c'est-à-dire le module optique 12.

Le premier moyen 25 est illustré sur la figure 4 en l'entourant d'un trait interrompu.

On peut encore observer que l'écran 20 comprend une première portion 20¹ destinée à coopérer avec le faisceau du module indicateur de direction 10, une deuxième portion 20² destinée à coopérer avec le faisceau du module lampe ville 12, et éventuellement une troisième portion intermédiaire 20³ à caractère esthétique.

Les première et deuxième portions 20¹ et 20² comprennent sur leur face externe (par rapport au projecteur) une série de surfaces ou facettes inclinées 20⁴ aptes à réfléchir les rayons traversant l'écran 20. Ces facettes de réflexion ou de réfraction 20⁴ forment un exemple de réalisation du premier moyen 25 agencé pour dévier une partie du faisceau lumineux selon un angle compris entre 35° et 45°.

Ces facettes de réflexion 20⁴ forment également un exemple de mise en œuvre d'un second moyen 26 adapté pour dévier une seconde partie du faisceau lumineux selon une direction comprise entre 70° et 80° vers l'extérieur du véhicule, c'est-à-dire vers le côté de celui-ci, par rapport à l'axe longitudinal 6 passant par le module optique 10, 12. On notera que la valeur de 80° est la plus contraignante et l'écran 20 qui fait partie de l'invention convient parfaitement pour atteindre le niveau d'éclairage requis par le règlement à 80°.

Ces facettes de réflexion 20⁴ appliquent par exemple un principe de réflexion totale. De cette manière, l'écran 20 reste transparent, à savoir qu'aucun revêtement réfléchissant n'est alors nécessaire. Les première et deuxième portions 20¹ et 20² sont préférentiellement coplanaires et forment préférentiellement un seul élément monobloc, moulé simultanément. La troisième partie 20³ ne comprend pas ces facettes compte tenu qu'elle a un rôle essentiellement esthétique.

L'écran 20 représenté à la figure 4 comprend également une patte de fixation 20⁵ s'étendant essentiellement perpendiculairement aux portions 20¹ et 20². La patte de fixation 20⁵ est destinée à être fixé au boîtier directement ou indirectement. En l'occurrence, la patte en question est destinée à être fixée à la portion de masque 22¹ qui s'étend entre les deux modules optiques 10 et 12 (voir figures 2 et 3). La patte peut être fixée notamment par clippage, soudage plastique et/ou collage.

Les figures 5 et 6 illustrent de manière schématique le parcours de rayons des deux modules optiques en collaboration avec l'écran 20.

Un premier rayon 24 émis par une source lumineuse 10¹ du premier module 10 est réfléchi par la surface réfléchissante 10² du réflecteur du premier module 10, plus particulièrement par la zone 10³ de ladite surface réfléchissante 10². Après réflexion, le rayon 24 rencontre la face arrière 20⁷ de l'écran 20, plus précisément de la première portion 20¹ de l'écran. La face arrière 20⁷ forme un premier dioptre et le rayon peut éventuellement être légèrement dévié en fonction de son angle d'incidence. Compte tenu de la géométrie du projecteur, le rayon en question présente un angle d'incidence limité. Il traverse alors l'épaisseur de l'écran 20 pour ensuite rencontrer un deuxième dioptre formé par un des premier ou second moyen 25 ou 26, par exemple des facettes 20⁴ (figure 6), et ce avec un angle d'incidence supérieur à l'ange d'incidence limite défini par la loi de Snell-Descartes (Θₗᵢₘ=arcsin(n₂/n₁), où n₁ et n₂ sont les indices de réfraction des deux matériaux formant le dioptre). A titre d'exemple, l'ange d'incidence limite pour un dioptre formé par de l'air (n₂=1) et du polycarbonate (n₁=1,591) est de l'ordre de 40°. Après réflexion sur une facette de réflexion/réfraction 20⁴, le rayon 24 rencontre ensuite une deuxième fois le deuxième dioptre formé par la face avant 20⁸ de l'écran 20, toutefois à un autre endroit, en l'occurrence sur une surface de liaison 20⁶ entre deux facettes inclinées 20⁴ consécutives. L'angle d'incidence est inférieur à l'ange d'incidence limite, si bien que le rayon 24 est réfracté et sort de l'écran 20 en étant dévié latéralement, soit 35 à 45° par rapport à sa direction juste avant de rencontrer l'écran 20.

Similairement, un rayon 26 émis par une source lumineuse 12¹ du deuxième module 12 est réfléchi par la surface réfléchissante 12² du réflecteur du module, plus particulièrement par la zone 12³ de ladite surface réfléchissante 10². Après réflexion, le rayon 26 rencontre la face arrière 20⁷ de la deuxième portion 20² de l'écran. Similairement au rayon 24, le rayon 26 rencontre le premier dioptre formé par la face arrière de l'écran. Il est alors réfracté et parcourt la matière de l'écran selon son épaisseur jusqu'à rencontrer une facette inclinée 20⁴ avec un angle d'incidence supérieur à l'angle d'incidence limite. Il est alors réfléchi vers une surface de liaison 20⁶ entre deux facettes 20⁴ consécutives, est réfracté et sort de l'écran 20 en étant dévié latéralement par rapport à sa direction initiale.

Bien entendu, les facettes de réflexion 20⁴ sont adaptées par modification de l'angle d'une de ces faces, au second moyen 26 pour que les rayons lumineux soient envoyés dans une direction formant un angle compris entre 70° et 80° par rapport à l'axe optique du module optique.

Les zones 10³ et 12³ des surfaces réfléchissantes 10² et 12² des modules 10 et 12, respectivement, peuvent être spécialement configurées pour réfléchir les rayons incidents provenant des sources lumineuses 10¹ et 12¹ essentiellement vers l'écran 20. Les surfaces réfléchissantes 10² et 12² peuvent présentent des profils généraux essentiellement paraboliques.

En se reportant aux figures 3 et 4, on constate qu'au moins une première portion 20¹ de l'écran 20 est délimitée par au moins trois bords 27, 28 et 29 et en ce qu'une autre partie du faisceau lumineux du premier module 10 passe à côté de la première portion 20¹ et au moins le long des trois bords 27 à 29. On comprend ici que la première portion 20¹ est parcourue à son travers par la première partie du faisceau lumineux, et également entourée sur au moins trois de ses côtés par une autre partie du faisceau lumineux qui n'est donc pas déviée par l'écran 20. La partie du faisceau qui traverse l'écran 20 éclaire de manière réglementaire seulement les points de la grille photométrique placés entre 35° et 45°, alors que le reste des points de la grille photométrique est éclairé par l'autre partie du faisceau lumineux qui a contourné l'écran 20.

Ces trois bords 27 à 29 s'étendent selon des directions concourantes, par exemple perpendiculaires.

La deuxième portion 20² de l'écran 20, qui comprend le premier moyen 25 et le deuxième moyen 26 pour dévier des rayons du faisceau lumineux généré par le deuxième module optique 12. Cette deuxième portion 20² est également délimitée par trois bords référencés 30, 31 et 32. Ces bords sont concourants.

L'écran 20 étant formé par la première portion 20¹ et la deuxième portion 20², chacune d'entre elles étant délimitée par trois bords respectifs. Deux bords 27 et 29, dits bords latéraux, de la première portion 20¹ sont alignés, c'est-à-dire confondus, avec deux des bords 31 et 32, dits bords latéraux, délimitant la deuxième portion 20².

L'écran qui vient d'être décrit peut présenter d'autres moyens de déviation des rayons, comme par exemple des moyens à réfraction, comme par exemple des surfaces de Fresnel. Ces moyens peuvent être utilisé en complément des moyens à réflexion tels que décrits ci-avant, ou encore en alternative.

## Revendications

1. Projecteur (4) disposé à l'avant et à un côté d'un véhicule automobile (2), comprenant :
- un boîtier (8) avec une ouverture ;
- au moins un premier module optique (10, 12) apte à produire un faisceau lumineux et logé dans le boîtier (8) ;
- une glace refermant l'ouverture du boîtier ;
- un écran transparent ou translucide (20) disposé entre la glace et le ou au moins un des modules optiques (10, 12), ledit écran formant un dioptre apte à dévier latéralement une première partie du ou des faisceaux lumineux dudit ou desdits modules optiques, respectivement,
**caractérisé en ce que** l'écran (20) comprend au moins un premier moyen (25) adapté pour dévier la première partie du faisceau passant au travers de l'écran selon une direction comprise entre 35° et 45° vers l'intérieur du véhicule par rapport à un axe longitudinal (6) passant par le module optique (10, 12), et **en ce qu'**une fonction réglementaire d'un indicateur de direction ou d'une lampe ville et/ou d'un éclairage ou feu diurne d'un véhicule est remplie par la combinaison de la partie du faisceau lumineux passant au travers de l'écran avec la partie du faisceau lumineux passant à côté de l'écran, ces parties de faisceau étant générées par le premier module.

2. Projecteur selon la revendication 1, dans lequel l'écran (20) comprend un second moyen (26) adapté pour dévier une seconde partie du faisceau selon une direction comprise entre 70° et 80° vers l'extérieur du véhicule par rapport à l'axe longitudinal (6) passant par le module optique (10, 12).

3. Projecteur (4) selon la revendication 1 ou 2, dans lequel l'écran (20) s'étend à distance de la glace, ladite distance étant notamment environ constante.

4. Projecteur (4) selon l'une des revendications précédentes, dans lequel le premier moyen et/ou le second moyen pour dévier la partie du faisceau comprend des moyens de réflexion (20⁴) et/ou de réfraction.

5. Projecteur (4) selon l'une des revendications 4, dans lequel l'écran (20) comprend une face d'entrée disposée en face du ou des modules optiques (10, 12), une face de sortie, et les moyens de réflexion étant formés par des facettes de réflexion (20⁴) ménagées sur au moins une desdites faces d'entrée et de sortie.

6. Projecteur (4) selon la revendication 5, dans lequel les facettes de réflexion (20⁴) de l'écran (20) sont inclinées de manière à ce que les rayons (24, 26) de la première partie et/ou de la seconde partie du faisceau lumineux rencontrent lesdits facettes de réflexion (20⁴) avec un angle d'incidence supérieur à l'angle limite de réfraction, lesdits rayons subissant alors une réflexion totale.

7. Projecteur (4) selon l'une des revendications 5 à 6, dans lequel la face de l'écran sur laquelle les facettes de réflexion (20⁴) sont présentes est plane.

8. Projecteur (4) selon l'une quelconque des revendications précédentes, dans lequel au moins une première portion (20¹) de l'écran (20) est délimitée par au moins trois bords (27, 28, 29) et en ce qu'une autre partie du faisceau lumineux du premier module (10) passe à côté de la première portion (20¹) et au moins le long des trois bords (27, 28, 29).

9. Projecteur (4) selon la revendication 8, dans lequel au moins deux des trois bords sont concourants.

10. Projecteur (4) selon l'une des revendications 1 à 9, **caractérisé en ce qu'**il comprend un deuxième module optique (10, 12) apte à produire un deuxième faisceau lumineux et logé dans le boîtier (8), l'écran (20) étant disposé de manière à ce qu'une première portion (20¹) dudit écran dévie latéralement une partie du faisceau lumineux du premier module (10) et une deuxième portion (20²) dudit écran dévie latéralement une partie du faisceau lumineux du deuxième module (12).

11. Projecteur (4) selon la revendication 10, dans lequel l'écran (20) comprend des moyens de fixation (20⁵) situés entre la première portion (20¹) et la deuxième portion (20²) dudit écran.

12. Projecteur (4) selon la revendication 11, dans lequel lesdits moyens de fixation comprenne une patte de fixation (20⁵) s'étendant en arrière de l'écran, notamment perpendiculairement aux première et deuxième portions (20¹, 20²).

13. Projecteur (4) selon l'une des revendications 10 à 12, **caractérisé en ce qu'**il comprend un masque (22) avec une portion (22¹) séparant les premier et deuxième modules (10, 12), l'écran (20) étant fixé à ladite portion de masque.

14. Projecteur (4) selon la revendication 13, dans lequel la première portion (20¹) et/ou la deuxième portion (20²) dudit écran est à distance de la portion (22¹) du masque.

15. Projecteur (4) selon la revendication 13 ou 14, dans lequel la portion (22¹) de masque (22) séparant les premier et deuxième modules (10, 12), et la patte de fixation (20⁵) de l'écran (20) s'étendent généralement horizontalement.

16. Projecteur (4) selon l'une quelconque des revendications 10 à 15, dans lequel la première portion (20¹) de l'écran (20) et la deuxième portion (20²) de l'écran (20) sont chacune délimitée par trois bords (27 à 32).

17. Projecteur (4) selon la revendication 16, dans lequel deux des bords délimitant la première portion (20¹) sont confondus avec deux des bords délimitant la deuxième portion (20²).

18. Projecteur (4) selon l'une quelconque des revendications 10 à 17, dans lequel le premier module (10) est disposé verticalement au-dessus du deuxième module (12).

19. Projecteur (4) selon l'une quelconque des revendications 10 à 18, dans lequel le premier module (10) est un indicateur de direction de véhicule et le deuxième module (12) est une lampe ville et/ou un éclairage diurne de véhicule.

20. Projecteur (4) selon l'une des revendications 10 à 19, **caractérisé en ce que** chacun des premier et deuxième modules (10, 12) comprend un réflecteur avec une surface réfléchissante (10², 12²) apte à réfléchir les rayons (24, 26) d'une ou plusieurs sources lumineuses (10³, 12³), lesdits réflecteur étant d'un seul tenant, préférentiellement venus de matière plastique.

## Patentansprüche

1. Projektor (4), der vor und an einer Seite eines Kraftfahrzeugs (2) angeordnet ist, umfassend:
- ein Gehäuse (8) mit einer Öffnung;
- mindestens ein erstes optisches Modul (10, 12), das dafür geeignet ist, einen Lichtstrahl zu erzeugen, und in dem Gehäuse (8) aufgenommen ist;
- ein Glas, das die Öffnung des Gehäuses umschließt;
- einen transparenten oder lichtdurchlässigen Bildschirm (20), der zwischen dem Glas und dem oder mindestens einem der optischen Module (10, 12) angeordnet ist, wobei der Bildschirm einen Diopter bildet, der dafür geeignet ist, lateral einen ersten Teil des oder der Lichtstrahlen jeweils von dem oder den optischen Modulen abzulenken;
**dadurch gekennzeichnet, dass** der Bildschirm (20) mindestens ein erstes Mittel (25) umfasst, das dafür geeignet ist, den ersten Teil des Strahls abzulenken, der quer durch den Bildschirm in einer Richtung zwischen 35° und 45° zum Inneren des Fahrzeugs in Bezug auf eine Längsachse (6) abzulenken, die durch das optische Modul (10, 12) hindurchgeht, und dadurch, dass eine Regelungsfunktion eines Fahrtrichtungsanzeigers oder eines Standlichts und/oder einer Tagfahrbeleuchtung oder eines Tagfahrlichts eines Fahrzeugs durch die Kombination des Teils des Lichtstrahls, der quer durch den Bildschirm hindurchgeht, mit dem Teil des Lichtstrahls, der an der Seite des Bildschirms vorbeigeht, erfüllt wird, wobei diese Teile des Strahls durch das erste Modul erzeugt werden.

2. Projektor nach Anspruch 1, wobei der Bildschirm (20) ein zweites Mittel (26) umfasst, das dafür geeignet ist, einen zweiten Teil des Strahls in einer Richtung zwischen 70° und 80° zur Außenseite des Fahrzeugs in Bezug auf die Längsachse (6) abzulenken, die durch das optische Modul (10, 12) hindurchgeht.

3. Projektor (4) nach Anspruch 1 oder 2, wobei sich der Bildschirm (20) über eine Distanz von dem Glas erstreckt, wobei die Distanz insbesondere ungefähr konstant ist.

4. Projektor (4) nach einem der vorhergehenden Ansprüche, wobei das erste Mittel und/oder das zweite Mittel zum Ablenken des Teils des Strahls Mittel zur Reflexion (20⁴) und/oder zur Brechung umfasst.

5. Projektor (4) nach einem der Ansprüche 4, wobei der Bildschirm (20) eine Eintrittsfläche, die gegenüber dem oder den optischen Modulen (10, 12) angeordnet ist, eine Austrittsfläche umfasst, und die Reflexionsmittel durch Reflexionsfacetten (20⁴) gebildet sind, die auf mindestens einer von der Eintritts- und Austrittsfläche angebracht sind.

6. Projektor (4) nach Anspruch 5, wobei die Reflexionsfacetten (20⁴) des Bildschirms (20) derart geneigt sind, dass die Strahlen (24, 26) des ersten Teils und/oder des zweiten Teils des Lichtstrahls auf die Reflexionsfacetten (20⁴) mit einem Einfallswinkel treffen, der größer ist als der Brechungsgrenzwinkel, wobei die Strahlen dann eine Totalreflexion eingehen.

7. Projektor (4) nach einem der Ansprüche 5 bis 6, wobei die Fläche des Bildschirms, auf der die Reflexionsfacetten (20⁴) vorhanden sind, eben ist.

8. Projektor (4) nach einem der vorhergehenden Ansprüche, wobei mindestens ein erster Abschnitt (20¹) des Bildschirms (20) von mindestens drei Rändern (27, 28, 29) begrenzt wird, und dadurch, dass ein anderer Teil des Lichtstrahls des ersten Moduls (10) auf der Seite des ersten Abschnitts (20¹) und mindestens entlang der drei Ränder (27, 28, 29) vorbeigeht.

9. Projektor (4) nach Anspruch 8, wobei mindestens zwei der drei Ränder nebeneinander verlaufen.

10. Projektor (4) nach einem der Ansprüche 1 bis 9, **dadurch gekennzeichnet, dass** er ein zweites optisches Modul (10, 12) umfasst, das dafür geeignet ist, einen zweiten Lichtstrahl zu erzeugen, und in dem Gehäuse (8) aufgenommen ist, wobei der Bildschirm (20) derart angeordnet ist, dass ein erster Abschnitt (20¹) des Bildschirms lateral einen Teil des Lichtstrahls des ersten Moduls (10) ablenkt, und ein zweiter Abschnitt (20²) des Bildschirms lateral einen Teil des Lichtstrahls des zweiten Moduls (12) ablenkt.

11. Projektor (4) nach Anspruch 10, wobei der Bildschirm (20) Befestigungsmittel (20⁵) umfasst, die zwischen dem ersten Abschnitt (20¹) und dem zweiten Abschnitt (20²) des Bildschirms angeordnet sind.

12. Projektor (4) nach Anspruch 11, wobei die Befestigungsmittel einen Befestigungsansatz (20⁵) umfassen, der sich hinter dem Bildschirm erstreckt, insbesondere rechtwinklig zu dem ersten und zweiten Abschnitt (20¹, 202) .

13. Projektor (4) nach einem der Ansprüche 10 bis 12, **dadurch gekennzeichnet, dass** er eine Maske (22) mit einem Abschnitt (22¹) umfasst, der das erste und zweite Modul (10, 12) trennt, wobei der Bildschirm (20) an dem Abschnitt der Maske befestigt ist.

14. Projektor (4) nach Anspruch 13, wobei sich der erste Abschnitt (20¹) und/oder der zweite Abschnitt (20²) des Bildschirms in einer Distanz von dem Abschnitt (22¹) der Maske befinden.

15. Projektor (4) nach Anspruch 13 oder 14, wobei sich der Abschnitt (22¹) der Maske (22), der das erste und zweite Modul (10, 12) trennt, und der Befestigungsansatz (20⁵) des Bildschirms (20) allgemein horizontal erstrecken.

16. Projektor (4) nach einem der Ansprüche 10 bis 15, wobei der erste Abschnitt (20¹) des Bildschirms (20) und der zweite Abschnitt (20²) des Bildschirms (20) jeweils von drei Rändern (27 bis 32) begrenzt werden.

17. Projektor (4) nach Anspruch 16, wobei zwei der Ränder, die den ersten Abschnitt (20¹) begrenzen, mit zweien der Ränder, die den zweiten Abschnitt (20²) begrenzen, zusammenfallen.

18. Projektor (4) nach einem der Ansprüche 10 bis 17, wobei das erste Modul (10) vertikal über dem zweiten Modul (12) angeordnet ist.

19. Projektor (4) nach einem der Ansprüche 10 bis 18, wobei das erste Modul (10) ein Fahrtrichtungsanzeiger eines Fahrzeugs ist, und das zweite Modul (12) ein Standlicht und/oder eine Tagfahrbeleuchtung eines Kraftfahrzeugs ist.

20. Projektor (4) nach einem der Ansprüche 10 bis 19, **dadurch gekennzeichnet, dass** jedes von dem ersten und zweiten Modul (10, 12) einen Reflektor mit einer Reflexionsfläche (10², 12²) umfasst, die dafür geeignet ist, die Strahlen (24, 26) einer oder mehrerer Lichtquellen (10³, 12³) zu reflektieren, wobei der Reflektor aus einem einzigen Stück besteht, vorzugsweise aus einem Kunststoffmaterial.

## Claims

1. Headlamp (4) arranged at the front and one side of a motor vehicle (2), comprising :
- a housing (8) with an opening ;
- at least a first optical module (10, 12) capable of producing a light beam and housed in the housing (8) ;
- an outer lens closing the opening of the housing ;
- a transparent or translucent screen (20) disposed between the outer lens and the or at least one of the optical modules (10, 12), said screen forming a diopter capable of laterally deflecting a first part of the light beam or beams of said optical module or modules, respectively,
**characterised in that** the screen (20) comprises at least a first means (25) adapted to deflect the first part of the beam passing through the screen in a direction between 35° and 45° towards the interior of the vehicle with respect to a longitudinal axis (6) passing through the optical module (10, 12), and **in that** a regulatory function of a turn indicator or city lamp and/or daytime running light of a vehicle is fulfilled by combining the part of the light beam passing through the screen with the part of the light beam passing beside the screen, these beam parts being generated by the first module.

2. A headlamp according to claim 1, wherein the screen (20) comprises second means (26) adapted to deflect a second part of the beam in a direction of between 70° and 80° outwards from the vehicle relative to the longitudinal axis (6) passing through the optical module (10, 12).

3. Projector (4) according to claim 1 or 2, wherein the screen (20) extends at a distance from the lens, said distance being in particular approximately constant.

4. A headlamp (4) according to one of the preceding claims, wherein the first means and/or the second means for deflecting the part of the beam comprises reflection (20⁴) and/or refraction means.

5. Projector (4) according to one of claims 4, in which the screen (20) comprises an input face disposed opposite the optical module or modules (10, 12), an output face, and the reflection means being formed by reflection facets (20⁴) provided on at least one of said input and output faces.

6. A projector (4) according to claim 5, wherein the reflection facets (204) of the screen (20) are inclined so that rays (24, 26) of the first part and/or the second part of the light beam meet said reflection facets (20⁴) with an angle of incidence greater than the limit angle of refraction, said rays then being totally reflected.

7. A projector (4) according to one of claims 5 to 6, wherein the face of the screen on which the reflection facets (20⁴) are present is flat.

8. Projector (4) according to any of the preceding claims, wherein at least a first portion (20¹) of the screen (20) is delimited by at least three edges (27, 28, 29) and in that another part of the light beam of the first module (10) passes next to the first portion (20¹) and at least along the three edges (27, 28, 29).

9. A headlamp (4) according to claim 8, in which at least two of the three edges are concurrent.

10. Projector (4) according to one of claims 1 to 9, **characterized in that** it comprises a second optical module (10, 12) capable of producing a second light beam and housed in the housing (8), the screen (20) being arranged so that a first portion (20¹) of said screen deflects laterally a part of the light beam of the first module (10) and a second portion (20²) of said screen deflects laterally a part of the light beam of the second module (12).

11. A projector (4) according to claim 10, wherein the screen (20) comprises fixing means (20⁵) located between the first portion (20¹) and the second portion (20²) of said screen.

12. Projector (4) according to claim 11, wherein said fixing means comprise a fixing lug (20⁵) extending behind the screen, in particular perpendicularly to the first and second portions (20¹, 20²).

13. A projector (4) according to one of claims 10 to 12, **characterized in that** it comprises a mask (22) with a portion (22¹) separating the first and second modules (10, 12), the screen (20) being fixed to said mask portion.

14. A projector (4) according to claim 13, wherein the first portion (20¹) and/or the second portion (20²) of said screen is spaced from the portion (22¹) of the mask.

15. A projector (4) according to claim 13 or 14, wherein the portion (22¹) of the mask (22) separating the first and second modules (10, 12), and the fixing lug (20⁵) of the screen (20) extend generally horizontally.

16. A projector (4) according to any one of claims 10 to 15, wherein the first portion (201) of the screen (20) and the second portion (20²) of the screen (20) are each bounded by three edges (27 to 32).

17. A headlamp (4) according to claim 16, wherein two of the edges delimiting the first portion (20¹) are merged with two of the edges delimiting the second portion (20²).

18. A headlamp (4) according to any one of claims 10 to 17, wherein the first module (10) is disposed vertically above the second module (12).

19. A headlamp (4) according to any one of claims 10 to 18, wherein the first module (10) is a vehicle turn indicator and the second module (12) is a city lamp and/or a vehicle daytime running light.

20. Headlamp (4) according to one of claims 10 to 19, **characterized in that** each of the first and second modules (10, 12) comprises a reflector with a reflecting surface (10², 12²) capable of reflecting the rays (24, 26) of one or more light sources (10³, 12³), said reflector being in one piece, preferably made of plastic material.
